# NOUVEAU FASCICULE DE BREVET EUROPEEN

(11) **EP 0 201 395 B2**
(45) Date de publication et mention de la décision concernant l'opposition: **14.06.1995**
(45) Mention de la délivrance du brevet: 03.01.1990
(21) Numéro de dépôt: 86400866.9
(22) Date de dépôt: 22.04.1986
(51) Int. Cl.: B23K 37/04, B62D 65/00

(54) **Dispositif d'assemblage destinés notamment aux lignes capacitaires de carrosseries**
Einrichtung zum Zusammenbau, insbesondere für Karosseriebearbeitungsstrassen
Assembly device, especially for car body assembly lines

(30) Priorité: 30.04.1985 FR 8506540
(43) Date de publication de la demande: 12.11.1986
(73) Titulaire: PRECIFLEX SYSTEMS, 95250 Beauchamp (FR)
(72) Inventeur: Fontaine, Christian, F-78120 Orcemont-Rambouillet (FR); Vaumoron, Pascal, F-92100 Boulogne Billancourt (FR); Pinchon, Gérard, F-78260 Achères (FR); Brachais, Christian, F-76170 Grandcamp (FR)
(74) Mandataire: Robert, Jean-Pierre

(56) Documents cités:
- DE-A- 2 810 822
- GB-A- 2 089 296
- GB-A- 2 114 067
- US-A- 4 494 687

## Description

La présente invention se rapporte à un dispositif d'assemblage de carrosseries connu en soi, du type adapté à une pluralité de modèles de véhicules et leurs variantes et pourvu de postes de mise en géométrie et de finition.

Le document GB-A-2 114 067 décrit un poste d'assemblage conventionnel par soudage pour des soubassements et ouvrants de caisses de véhicule.

L'état de la technique dans ce domaine spécifique ne révèle et ne suggère aucun système capable de permettre le passage sur une même chaîne, d'une pluralité de modèles de véhicule et de leurs variantes évolutives.

Généralement, les outillages sont embarqués sur des cadres latéraux qui peuvent se déplacer parallèlement à l'axe de transfert en étant indexables au poste de travail. Cette disposition est illustrée par le document DE-A-2 810 822. En effet, ce document décrit un dispositif d'assemblage de carrosseries du type adapté à une pluralité de modèles de véhicules et de leurs variantes comportant des moyens d'alimentation d'une carrosserie sommairement assemblée, des moyens d'évacuation de la carrosserie assemblée, un poste de mise en géométrie et de finition, des moyens de stockage d'outillages de géométrie, des moyens de leur distribution et de leur présentation au poste de mise en géométrie et des robots ou opérateurs d'assemblage.

Les outillages de géométrie comportent en plus des cadres de manière connue un outillage inférieur supporté par des chariots mobiles circulant sur des rails au-dessous de tables fixes à rouleaux qui permettent le déplacement de luges de manutention en coopération avec des boîtiers à rouleaux montés sur des élévateurs, opérant le chargement dudit outillage inférieur.

Une paire de cadres se révèle spécifique à une carrosserie déterminée.

Les inconvénients rencontrés sont nombreux :
- la géométrie d'une carrosserie est obtenue par deux cadres indépendants ;
- la prise en compte des références axiales sur une carrosserie est difficile ;
- les robots ou les opérateurs doivent intervenir à travers ces cadres latéraux ;
- le passage d'au moins trois carrosseries différentes devient très problématique ;
- la masse à déplacer est importante ;
- le principe utilisé est incompatible avec un soudage faisant intervenir des pinces manuelles ;
- la reconvertibilité reste problématique.

L'invention a pour but de remédier à ces inconvénients en répondant au mieux aux besoins de la clientèle qui consistent à :
- assembler, simultanément, sur une même chaîne, des carrosseries différentes et adapter ainsi la production à la demande ;
- se doter d'un moyen de fabrication permettant un investissement progressif en fonction des nécessités.

A cet effet, l'invention a pour objet un dispositif d'assemblage de carrosseries du type adapté à une pluralité de modèles de véhicules et de leurs variantes comportant des moyens d'alimentation d'une carrosserie sommairement assemblée, des moyens d'évacuation de la carrosserie assemblée, un poste de mise en géométrie et de finition comportant des moyens de stockage d'outillages de géométrie, des moyens de leur distribution et de leur présentation au poste de mise en géométrie et des robots ou opérateurs d'assemblage, dans lequel les outillages de géométrie comportent de manière connue un outillage inférieur supporté par des chariots mobiles circulant sur des rails au-dessous de tables fixes à rouleaux qui permettent le déplacement de luges de manutention en coopération avec des boîtiers à rouleaux montés sur des élévateurs, opérant le chargement dudit outillage inférieur, un outillage supérieur avant et un outillage supérieur arrière, les outillages supérieurs étant, en position active en regard de la carrosserie, attelés à un arceau référentiel par l'intermédiaire d'un axe de pivotement horizontal de cet outillage, l'outillage inférieur coopérant en position active avec chaque outillage supérieur articulé sur l'arceau référentiel par un pied de recentrage qui est porté par l'outillage inférieur, tandis que les moyens de distribution et de présentation des outillages supérieurs sont prévus entre l'arceau référentiel et les moyens de stockage.

Cette particularité permet de rendre une installation pour la mise en oeuvre de ce procédé parfaitement convertible et flexible.

Suivant une autre particularité, les moyens de stockage sont formés d'un portique et de deux ensembles symétriques comportant chacun un magasin rotatif d'axe vertical à outillages supérieurs entraîné par une couronne d'orientation, un pignon et un motoréducteur asservi, les moyens de manutention des outillages supérieurs du poste de stockage vers leur position active comportant une table à ciseaux mobile verticalement.

Le magasin rotatif permet de disposer d'un nombre important d'outillages supérieurs.

Le principe consistant à descendre cet abattant audessus du module machine pour présenter les outillages supérieurs permet de libérer les parties latérales du poste flexible d'assemblage ; le passage des opérateurs ou des robots est ainsi grandement facilité.

D'autres particularités et avantages de l'invention apparaîtront plus clairement à la lecture de la description qui suit d'un mode de réalisation préféré, donné à titre d'exemple non limitatif en référence aux dessins annexés dans lesquels :
- la figure 1 représente une vue longitudinale partielle en perspective d'un dispositif d'assemblage conforme à l'invention ;
- la figure 2 représente une vue longitudinale partielle de ce dispositif ;
- la figure 3 représente une vue transversale partielle de ce dispositif ;

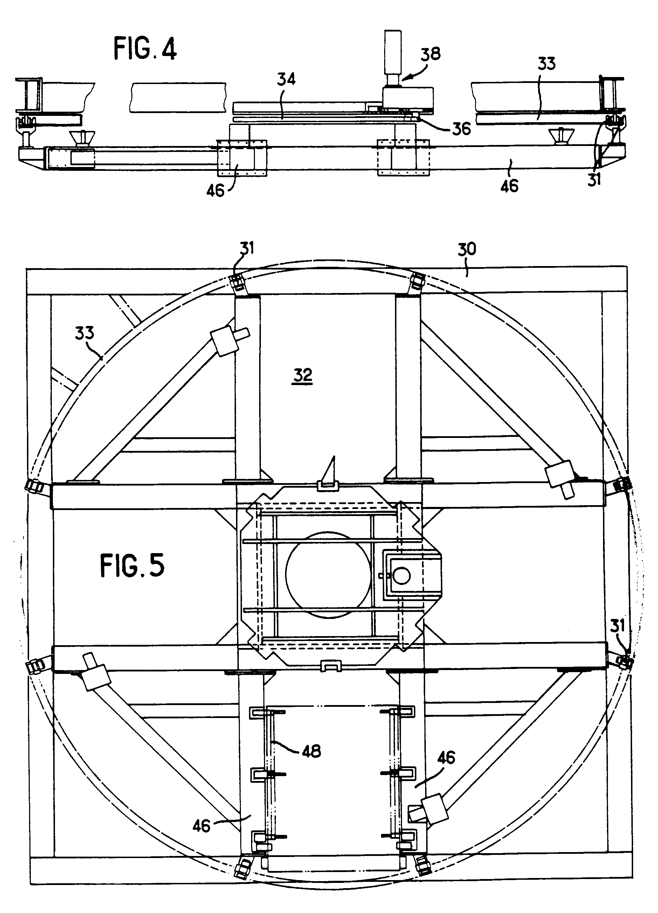

- les figures 4 et 5 représentent des vues partielles de face et de dessus d'un magasin rotatif utilisé dans ce dispositif ;

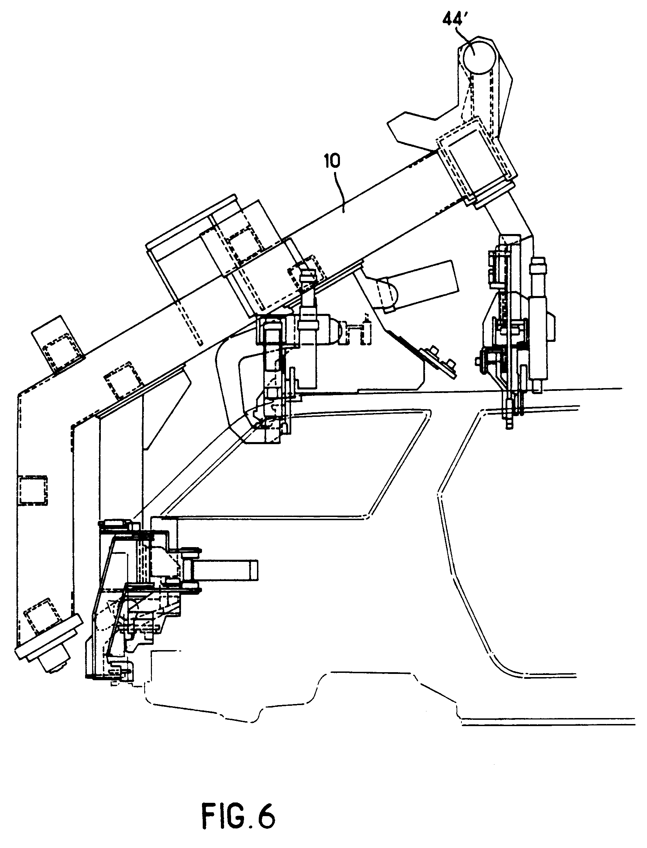

- la figure 6 représente une vue de profil d'un outillage supérieur utilisé dans ce dispositif ;

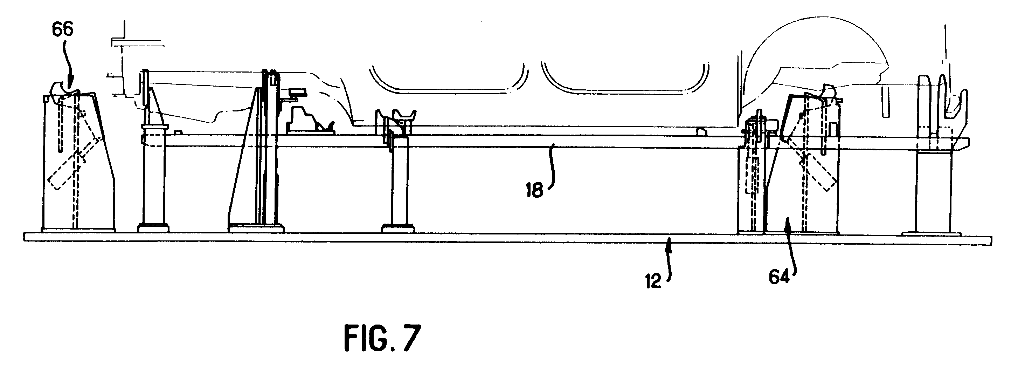

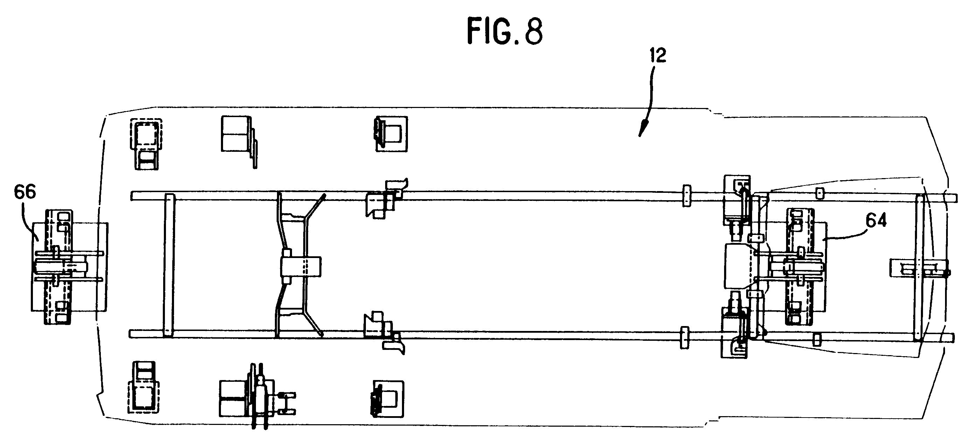

- et les figures 7 et 8 représentent des vues de face et de dessus d'un outillage inférieur utilisé dans ce dispositif.

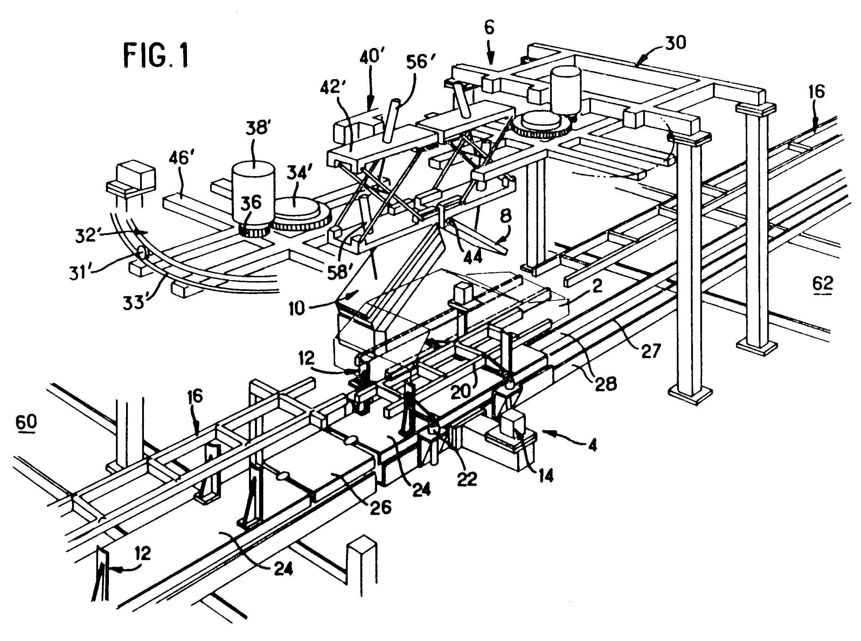

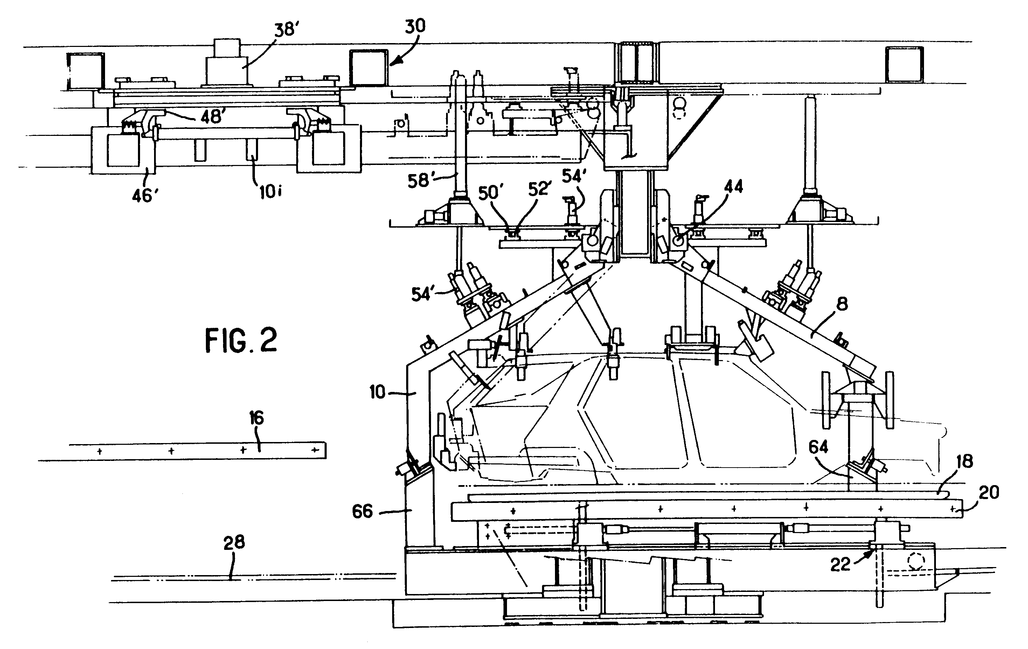

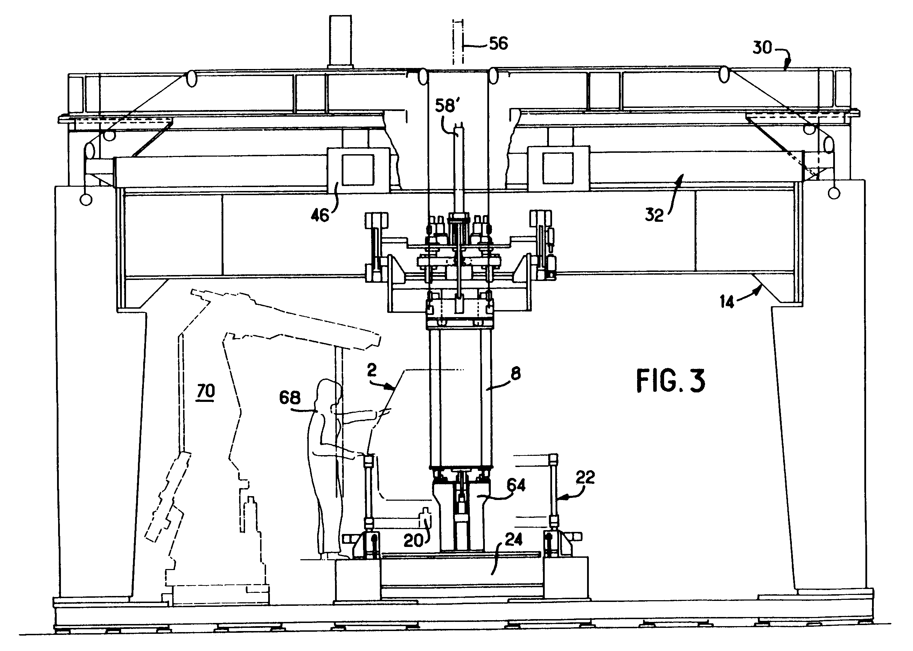

Conformément aux figures 1, 2 et 3, ce dispositif d'assemblage de carrosseries se compose de deux parties distinctes : un module machine 4 et un module de structure 6.

Ce module machine comprend un bâti-portique dit arceau référentiel 14 pour la réception d'outillages supérieurs 8, 10 et inférieur 12, des tables fixes 16 à rouleaux sur lesquelles se déplacent des luges de manutention 18, des boîtiers latéraux 20 à rouleaux montés sur des élévateurs 22 et susceptibles de recevoir ces luges, et des chariots mobiles 24 accouplables à un chariot-navette motorisé 26, surmontés chacun d'un outillage inférieur 12 et circulant sur des rails 28 au-dessous de ces tables fixes 16.

Ce module de structure est constitué par un portique 30 et deux ensembles symétriques qui comprennent chacun :
- un magasin rotatif 32, 32' à outillages supérieurs 8, 10 entraîné par une couronne d'orientation 34, 34', un pignon 36, 36' et un moto-réducteur asservi 38, 38' ;
- et un abattant 40, 40' pourvu d'une table à ciseaux 42, 42' mobile verticalement et sur la partie inférieure de laquelle un outillage supérieur 8, 10 est articulé autour d'un axe horizontal 44, 44'.

Dans le module machine 4, les chariots mobiles 24 se déplacent dans le sens de transfert sur les rails 28 au-dessous du chemin de roulement des luges de manutention 18 qui portent les carrosseries 2. Chaque chariot comporte une plateforme amovible sur laquelle est fixé un outillage inférieur spécifique à une carrosserie. Un rail de guidage 27 sur lequel s'appuient deux jeux de deux galets à axe vertical, est disposé entre les rails 28. Une crémaillère est fixée sur ce rail de guidage de manière à coopérer avec un pignon solidaire de ce chariot.

Un moteur asservi est embarqué sur le chariot-navette 26 qui est intercalé entre deux chariots mobiles 24. Un système de pinçage est prévu pour obtenir une position d'arrêt précise dans le sens de transfert, et un verrouillage de l'ensemble de ces chariots.

En amont et en aval du poste de travail, un chariot mobile peut être retiré perpendiculairement à l'axe de transfert à des postes d'échange respectifs 60 et 62.

Par carrosserie, il est prévu un outillage inférieur unique 12 et deux outillages supérieurs 8, 10 destinés respectivement à l'avant et à l'arrière de celle-ci. Un changement de la configuration du poste de travail est donc envisagée pendant le temps de transfert d'une carrosserie pour passer un autre type de carrosserie.

Une version de base permet de disposer de quatre types d'outillages inférieurs et de quatre types d'outillages supérieurs avant ou arrière.

Une extension possible consiste à associer aux magasins rotatifs 32, 32', des changeurs d'outillages supérieurs et au module machine 4, des changeurs d'outillages inférieurs.

Les outillages supérieurs avant 8 et arrière 10 sont animés par deux systèmes de commande identiques.

Les outillages 8, 10 sont mis en place par les abattants 40, 40'.

En descendant ces outillages en position de travail sur une carrosserie 2, les parties latérales du poste d'assemblage peuvent être libérées pour faciliter le passage d'opérateurs 68 ou de robots 70.

Ces outillages sont amovibles et passent d'un emplacement inactif, sur un magasin rotatif,à un emplacement actif sur un abattant.

Le magasin rotatif 32, 32' est conçu pour recevoir quatre outillages supérieurs 8ᵢ, 10ᵢ qui reposent sur huit brancards 46, 46' liés à un fût. Il dispose de galets 31, 31' sur sa périphérie et peut tourner sur une couronne 33, 33' solidaire du portique 30. L'entraînement en rotation de la couronne d'orientation 34, 34' lié au magasin 32, 32' est réalisé par un moto-réducteur asservi 38, 38' attaquant un pignon 36, 36'. Ce moteur asservi permet de programmer des rampes d'accélération et de décélération, et obtenir un arrêt précis en position. Un système d'indexage permet de s'assurer de cet arrêt précis en ramenant si nécessaire le magasin rotatif à la position prévue, et commande aussi le verrouillage de celui-ci dans cette position.

Les outillages supérieurs 8ᵢ, 10ᵢ situés sur les brancards 46, 46' sont indexés et soutenus par des taquets articulés 48, 48' formant des rails de roulement pour ces outillages pourvus de galets. Ceci permet de retirer les outillages du magasin, perpendiculairement à l'axe de transfert. Le déchargement (ou rechargement) peut être automatisé pour augmenter la capacité du magasin.

La présentation de ces outillages, en position de travail, est effectuée par deux mouvements, distincts :
- une descente verticale au moyen d'une table à ciseaux 42, 42' suspendue au portique 30 et actionnée par un vérin hydraulique 56, 56' ;
- un basculement autour d'un axe horizontal 44, 44' solidaire de l'outillage supérieur 8, 10, d'un angle déterminé variant en fonction de la carrosserie qui arrive, et par action d'un vérin hydraulique 58, 58'.

Quand cet angle est important, un second vérin peut être associé au vérin 58, 58'.

En fin de rotation, l'outillage supérieur 8, 10 est mis en référence et bridé sur le bâti-portique 14 dit arceau référentiel et l'outillage inférieur 12, respectivement par l'intermédiaire de l'axe de pivotement horizontal 44, 44' de cet outillage supérieur, et d'un pied de recentrage 64, 66 solidaire de cet outillage inférieur.

L'indexage et le verrouillage d'un outillage supérieur 8ᵢ, 10ᵢ sur la table à ciseaux 42, 42' sont réalisés au cours de la rotation du magasin 32, 32' au moyen de tenons 50, 50' solidaires de celle-ci, et de rainures en té 52, 52' ménagées dans cet outillage et dans lesquelles peuvent s'engager avec jeu des tenons animés par des vérins 54, 54'.

Le bridage de cet outillage sur l'abattant 40, 40' est alors effectué. Puis l'abattant est déverrouillé pour amorcer une descente verticale puis une rotation quand l'axe de pivotement 44 est bien en référence sur l'arceau 14. L'outillage supérieur se maintient de son propre poids sur ses appuis, tous les bridages étant libérés pour éviter les contraintes.

Pour remettre cet outillage supérieur dans le magasin rotatif, il faut retirer les verrous qui le lient au module machine.

Cet outillage est ensuite bridé sur l'abattant et remonté au niveau des brancards 46, 46'. Cet abattant est alors verrouillé en position haute.

La montée assure automatiquement l'ouverture des taquets articulés 48, 48' par l'intermédiaire d'une came. Une surcourse est effectuée pour refermer ces taquets.

Si le même outillage doit être utilisé au cycle suivant, on s'arrête à ce stade. Sinon, l'outillage est libéré de l'abattant pour venir en appui dans le magasin. L'évolution de ce magasin est alors rendu possible après recul du verrou (indexage du magasin).

Le dispositif d'assemblage de carrosseries précédemment décrit fonctionne de la manière suivante, suivant un cycle complet de travail, en référence aux figures 1, 2 et 3.

Une carrosserie sommairement assemblée 2 et posée sur la luge de manutention est dirigée vers le poste de travail en roulant sur la table fixe 16 puis sur les boîtiers à rouleaux 20.

L'ensemble constitué par la carrosserie, la luge et les boîtiers à rouleaux est ensuite descendu sous l'action des élévateurs 22 jusqu'à ce que la carrosserie repose sur les références de l'outillage inférieur 12.

De manière enchaînée, la descente verticale des tables à ciseaux 42 et le basculement des outillages supérieurs 8, 10 sont effectués.

Le bridage pneumatique des éléments de carrosserie sur toutes les références des outillages supérieurs et inférieur est alors réalisé pour la mise en géométrie de ces éléments.

Les opérateurs 68 ou les robots 70 interviennent ensuite pour exécuter l'assemblage de la carrosserie, par exemple par soudage.

Puis vient la phase de débridage pneumatique de la carrosserie en fin d'assemblage. Les abattants avant 8 et arrière 10 sont remontés au niveau des magasins 32, 32'.

Les élévateurs 22 remontent de façon séquentielle l'ensemble carrosserie-luge-boîtiers à rouleaux au niveau de la table fixe 16.

La carrosserie assemblée est alors évacuée vers le poste aval, alors qu'une nouvelle carrosserie arrive au poste de travail.

Trois cas de figure se posent à cet instant et pendant les déplacements des carrosseries :
- la carrosserie suivante est identique à la précédente. Le cycle décrit est réitéré ;
- la carrosserie suivante appartient à la famille de la précédente (par exemple berline et break). L'outillage inférieur est conservé alors que les outillages supérieurs doivent être changés.

La mise en rotation des magasins 32, 32' entraîne alors automatiquement le déverrouillage et la séparation des outillages supérieurs précédents, puis l'indexage et le verrouillage des outillages supérieurs sélectionnés.

Ces opérations sont effectuées pendant le transfert des carrosseries, ce qui ne pénalise pas le temps de cycle.

Le cycle de travail se poursuit alors comme dans le premier cas.
- La carrosserie suivante diffère totalement de la précédente.

Les outillages supérieurs sont changes comme dans le second cas.

L'outillage inférieur embarqué sur un chariot mobile 24 accouplé au chariot-navette motorisé 26 est changé, soit par indexage au poste de travail, de l'autre chariot mobile accouplé à ce chariot-navette, soit par remplacement de l'un d'entre eux par un chariot mobile portant l'outillage approprié, en attente au poste d'échange amont 60 ou aval 62, hors de la ligne de transfert.

Les déplacements de ces chariots sont effectués au cours des évolutions de carrosseries, ce qui ne pénalise également pas le temps de cycle.

## Revendications

1. Dispositif d'assemblage de carrosseries du type adapté à une pluralité de modèles de véhicules et de leurs variantes comportant des moyens d'alimentation d'une carrosserie (2) sommairement assemblée, des moyens d'évacuation de la carrosserie assemblée, un poste de mise en géométrie et de finition comportant des moyens de stockage d'outillages de géométrie (8, 10, 12), des moyens de leur distribution et de leur présentation au poste de mise en géométrie et des robots (70) ou opérateurs (68) d'assemblage, dans lequel les outillages de géométrie comportent un outillage inférieur (12) supporté par des chariots mobiles (24) couplables à un chariot navette motorisé (26) circulant sur des rails (28) au-dessous de tables fixes à rouleaux (16) qui permettent le déplacement de luges de manutention (18) en coopération avec des boîtiers à rouleaux (20) montés sur des élévateurs (22), opérant le chargement dudit outillage inférieur (12), un outillage supérieur avant (8) et un outillage supérieur arrière (10), les outillages supérieurs (8,10) étant, en position active en regard de la carrosserie, attelés à un arceau référentiel (14) par l'intermédiaire d'un axe de pivotement horizontal (44, 44') de cet outillage, l'outillage inférieur (12) coopérant en position active avec chaque outillage supérieur (8,10) articulé sur l'arceau référentiel (14) par un pied de recentrage qui est porté par l'outillage inférieur, tandis que les moyens de distribution et de présentation (30, 42, 42') des outillages supérieurs (8, 10) sont prévus entre l'arceau référentiel (14) et les moyens de stockage (32, 32').

2. Dispositif selon la revendication 1, caractérisé en ce que les moyens de stockage sont formés d'un portique (20) et de deux ensembles symétriques comportant chacun un magasin rotatif d'axe vertical (32, 32') à outillages supérieurs (8, 10) entraîné par une couronne d'orientation (34, 34'), un pignon (36, 36') et un motoréducteur asservi (38, 38'), les moyens de manutention des outillages supérieurs (8, 10) du poste de stockage vers leur position active comportant une table à ciseaux (42, 42') mobile verticalement.

3. Dispositif suivant la revendication 2, caractérisé en ce que chacun des deux magasins rotatifs avant et arrière (32, 32') comporte des brancards (46, 46') pour supporter au moins deux outillages supérieurs (8, 10) où ils sont indexés et soutenus par des taquets articulés (48, 48').

4. Dispositif selon la revendication 2, caractérisé en ce que, pour permettre la rotation du magasin (32, 32'), l'indexage et le verrouillage d'un outillage supérieur (8,10) sur la table à ciseaux (42, 42') sont réalisés au moyen de tenons (50, 50') solidaires de ladite table et de rainures en té (52, 52') ménagées dans cet outillage (8, 10), et dans lesquelles peuvent s'engager avec jeux lesdits tenons (50, 50') animés par des vérins (54, 54'), l'axe de translation de ces couples tenon/rainure étant orienté tangentiellement au mouvement relatif de l'outil déplacé par le magasin rotatif.

5. Dispositif selon l'une quelconque des revendications 2 à 4 caractérisé en ce que les magasins rotatifs (32, 32') sont équipés à leur périphérie de bogies de soutien à galets (31, 31') coulissant sur une couronne (33, 33') solidaire du portique (30).

6. Dispositif selon l'une quelconque des revendications 2 à 5, caractérisé en ce qu'un changeur d'outillage peut être associé à chaque magasin rotatif (32, 32') pour augmenter la capacité de stockage en outillages supérieurs.

7. Dispositif selon la revendication 1, caractérisé en ce que des postes d'échange (60, 62) qui accueillent des chariots mobiles portant différents outillages inférieurs, sont prévus à l'amont et à l'aval du poste de travail, perpendiculairement à l'axe de transfert des carrosseries.

## Claims

1. A bodywork assembly means of the type suitable for coping with a plurality of models of vehicle and their variants comprising means for supplying a briefly assembled body (2), means for removing the assembled body, a station for adjusting the geometry and for finishing including storage means of geometry tools (8, 10, 12), distribution and presentation means of said geometry tools at said station and robots (70) or operators (68) assembling means, wherein said geometry tools include lower tool (12) supported by movable trolleys (24) which can be coupled to a motor powered shuttle (26) running on trails (28) under stationary roller-mounted tables (16) which allow the movement of handling crodles (18) in cooperaion with roller-mounted cages (20) mounted on hoists (22) for performing the loading of lower tools, front upper tool (8) and rear upper tool (10), said upper tool being, when operative with respect to the bodywork, connected to a referential arch (14) by means of a horizontal pivot axis (44, 44') of said upper tool, lower tool when operative cooperating with each upper tools pivoted on said referential arch (14) by means of a centering foot supported by lower tool, while distribution and presentation means (30, 42, 42') of upper tools (8, 10) are provided between the referential arch (14) and the storage means (32, 32').

2. Means according to claim 1 characterized in that storage means consists of a gantry (30) and two symmetrical assemblies each comprising a magazine (32, 32') rotatable around a vertical axis carrying upper tools (8, 10) driven by an orientating ring gear (34, 34'), a pinion (36, 36') and a controlled geared motor (38, 38'), the handling means of upper tools (8, 10) from a storage position to an operative position including a vertically movable scissor-action table (42, 42').

3. Means according to claim 2, characterized in that each of the front and rear rotary magazines (32, 32') includes arms (46, 46') on which rest at least two upper tools (8, 10) indexed therein and supported by articulated tappets (48, 48').

4. Means according to claim 2 characterized in that for rotating the magazine (32, 32') the indexing and locking of upper tools (8, 10) on the scissor-action table (42, 42') are carried out by means of tenons (50, 50') rigid therewith, an T-shaped grooves (52, 52') disposed in these tools and in which it is possible for the said tenons, driven by jacks (54, 54'), to engage with clearance, the translation direction of the tenon/groove couple being oriented as a tangent of the relative movement of the tools moved by the rotary magazine.

5. Means according to any one of claims 2 to 4, characterized in that the rotary magazines (32, 32') are peripherically provided with supporting rollers trucks (31, 31') which are movable on a geared ring (33, 33') rigid with the gantry (30).

6. Means according to any one of the claims 2 to 5, characterized in that a tool changer is associated with each rotary magazine (32, 32') to increase the capacity of the latter.

7. Means according to claim 1, characterized in that exchange stations (60, 62) which receive movable trolleys carrying different lower tools are provided upstream and downstream the working station at right-angles to the body transfer axis.

## Patentansprüche

1. Vorrichtung zum Zusammenbau von Karosserien der für eine Mehrzahl von Fahrzeugmodellen geeigneten Art und ihrer Varianten, umfassend Mittel zum Zuführen einer summarisch zusammengebauten Karosserie (2), Mittel zum Abtransport der zusammengebauten Karosserie, eine Station zum Richten und Fertigstellen mit Mitteln zum Speichern von Richtwerkzeuganordnungen (8, 10, 12), Mitteln zu ihrer Verteilung und ihrer Bereitstellung an der Richtstation, sowie Roboter (70) oder Bedienungspersonen (68) zum Zusammenbau, bei welcher die Richtwerkzeuge eine untere Werkzeuganordnung (12), die von beweglichen Wagen (24) getragen ist, die an einen motorisierten Pendelwagen (26) koppelbar sind, der auf Schienen (28) unter feststehenden Rollentischen (16) läuft, welche im Zusammenwirken mit auf Hubvorrichtungen (22) montierten Rollenkästen (20) die Bewegung von Transportschlitten (18) ermöglichen, wobei die Hubvorrichtungen das Beladen der unteren Werkzeuganordnung (12) bewirken, eine vordere obere Werkzeuganordnung (8) und eine hintere obere Werkzeuganordnung (10) umfassen, wobei die obere Werkzeuganordnung (8, 10) in ihrer Arbeitsstellung gegenüber der Karosserie an einem Referenzportal (14) mittels einer horizontalen Schwenkachse (44, 44') dieser Werkzeuganordnung angehängt sind und wobei die untere Werkzeuganordnung (12) in der Arbeitsstellung mit jeder an dem Referenzportal angelenkten oberen Werkzeug (8, 10) über einen Zentrierfuß zusammenwirkt, der von der unteren Werkzeuganordnung getragen ist, wogegen die Mittel zur Verteilung und zur Bereitstellung (30, 42, 42') der oberen Werkzeuganordnung (8, 10) zwischen dem Referenzportal (14) und der Speichereinrichtung (32, 32') vorgesehen sind.

2. Vorrichtung nach Anspruch 1, dadurch **gekennzeichnet**, daß die Speichereinrichtung von einem Portal (30) und zwei symmetrischen Anordnungen gebildet ist, von denen jede ein um eine vertikale Achse drehbares Drehmagazin (32, 32') für die obere Werkzeuganordnung (8, 10) umfaßt, das über einen Drehkranz (34, 34'), ein Ritzel (36, 36') und einen geregelten Getriebemotor (38, 38') angetrieben ist, wobei die Transportmittel zum Transport der oberen Werkzeuganordnungen (8, 10) von der Speicherstation zu ihrer Arbeitsstellung einen vertikal verstellbaren Scherengelenktisch (42, 42') umfassen.

3. Vorrichtung nach Anspruch 2, dadurch **gekennzeichnet**, daß das vordere und das hintere Drehmagazin (32, 32') jeweils Träger (46, 46') zum Tragen mindestens zweier oberer Werkzeuganordnungen (8, 10) haben, an denen sie mit Hilfe von Gelenkklauen (48, 48') verriegelt und gehalten sind.

4. Vorrichtung nach Anspruch 2, dadurch **gekennzeichnet**, daß zur Ermöglichung einer Drehung des Magazins (32, 32') die Positionierung und die Verriegelung einer oberen Werkzeuganordnung (8, 10) an dem Scherengelenktisch (42, 42') mit Hilfe von am Tisch befestigten Zapfen (50, 50') und t-förmigen Nuten (52, 52') erfolgt, die in der Werkzeuganordnung (8, 10) ausgebildet sind und in die die genannten Zapfen (50, 50') eingreifen können, die von Stellzylindern (54, 54') bewegt werden, wobei die Achse der Translationsbewegung der Zapfen/Nut-Paare tangential zur Relativbewegung der Werkzeuganordnung, die mit Hilfe des Drehmagazins verstellt wird.

5. Vorrichtung nach einem der Ansprüche 2 bis 4, dadurch **gekennzeichnet**, daß die Drehmagazine (32, 32') an ihrem Umfang mit Stützrollen-Fahrgestellen (31, 31') versehen sind, die auf einem mit dem Portal (30) verbundenen Kranz (33, 33') laufen.

6. Vorrichtung nach einem der Ansprüche 2 bis 5, dadurch **gekennzeichnet**, daß ein Werkzeugwechsler mit jedem Drehmagazin (32, 32') verbunden sein kann, um die Speicherkapazität für obere Werkzeuganordnungen zu erhöhen.

7. Vorrichtung nach Anspruch 1, dadurch **gekennzeichnet**, daß Wechselstationen (60, 62), welche verschiedene untere Werkzeuganordnungen tragende mobile Wagen aufnehmen, stromaufwärts und stromabwärts der Arbeitsstation senkrecht zur Transportrichtung der Karosserien vorgesehen sind.
